# EUROPEAN PATENT APPLICATION

(11) **EP 4 708 794 A1**
(43) Date of publication of application: **11.03.2026**
(21) Application number: 25199826.6
(22) Date of filing: 03.09.2025
(51) Int. Cl.: H04L 27/26, G06N 20/00

(54) **MACHINE LEARNING MODEL FOR PREDICTING CREST FACTOR REDUCTION CONFIGURATION PARAMETER VALUES**

(30) Priority: 03.09.2024 FI 20246087
(71) Applicant: Nokia Solutions and Networks Oy, 02610 Espoo (FI)
(72) Inventor: WANG, Liang, 90590 Oulu (FI)
(74) Representative: Nokia EPO representatives

(57) **Abstract**

Disclosed is a method comprising selecting one or more crest factor reduction processing characteristics to be optimized for a crest factor reduction technique; collecting use case attribute data comprising a set of values of one or more use case attributes associated with the crest factor reduction technique; determining, based on the use case attribute data, a set of optimized configuration parameter values for the one or more crest factor reduction processing characteristics; generating a set of labelled training data based on the use case attribute data and the set of optimized configuration parameter values; and training, based on the set of labelled training data, a machine learning model for predicting configuration parameter values for the one or more crest factor reduction processing characteristics.

## Description

### FIELD

The following example embodiments relate to wireless communication and to machine learning.

### BACKGROUND

Crest factor reduction (CFR) is a technique used to lower the peak-to-average power ratio (PAPR) of transmitted radio signals, which helps to improve the efficiency of power amplifiers in wireless communication systems.

### SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided an apparatus comprising: means for selecting one or more crest factor reduction processing characteristics to be optimized for a crest factor reduction technique; means for collecting use case attribute data comprising a set of values of one or more use case attributes associated with the crest factor reduction technique; means for determining, based on the use case attribute data, a set of optimized configuration parameter values for the one or more crest factor reduction processing characteristics; means for generating a set of labelled training data based on the use case attribute data and the set of optimized configuration parameter values; and means for training, based on the set of labelled training data, a machine learning model for predicting configuration parameter values for the one or more crest factor reduction processing characteristics.

According to a second aspect, there is provided the apparatus of the first aspect, further comprising: means for training, based on the set of labelled training data, a plurality of machine learning models for predicting the configuration parameter values for the one or more crest factor reduction processing characteristics, wherein the means for training the plurality of machine learning models are configured to train each machine learning model of the plurality of machine learning models with a different supervised machine learning algorithm; means for comparing a performance of the plurality of machine learning models after training the plurality of machine learning models; and means for selecting, based on the comparison, the machine learning model from the plurality of machine learning models.

According to a third aspect, there is provided the apparatus of any of the first or second aspects, further comprising: means for evaluating a performance of the machine learning model, wherein the evaluation of the performance is based on a different set of values of the one or more use case attributes than the set of values used for generating the set of labelled training data; and means for determining whether the performance of the machine learning model fulfils one or more performance criteria; and means for deploying the machine learning model to a wireless communication device, based on determining that the performance of the machine learning model fulfils the one or more performance criteria.

According to a fourth aspect, there is provided the apparatus of any of the first or second aspects, further comprising: means for evaluating a performance of the machine learning model, wherein the evaluation of the performance is based on a different set of values of the one or more use case attributes than the set of values used for generating the set of labelled training data; means for determining whether the performance of the machine learning model fulfils one or more performance criteria; means for regenerating, based on determining that the performance of the machine learning model does not fulfil the one or more performance criteria, the set of labelled training data based on a different set of features from the use case attribute data compared to a set of features used for generating the set of labelled training data previously used for training the machine learning model; and means for repeating the training of the machine learning model based on the set of labelled training data after the regeneration.

According to a fifth aspect, there is provided the apparatus of any of the first or second aspects, further comprising: means for evaluating a performance of the machine learning model, wherein the evaluation of the performance is based on a different set of values of the one or more use case attributes than the set of values used for generating the set of labelled training data; means for determining whether the performance of the machine learning model fulfils one or more performance criteria; means for collecting additional use case attribute data, based on determining that the performance does not fulfil the one or more performance criteria; means for generating an additional set of labelled training data based on the additional use case attribute data; and means for repeating the training of the machine learning model based on the additional set of labelled training data.

According to a sixth aspect, there is provided the apparatus of any of the third to fifth aspects, wherein the one or more performance criteria comprise at least: a deviation to a reference error vector magnitude being less than a first pre-defined threshold, and a margin to a spectral emission mask limit being greater than a second pre-defined threshold.

According to a seventh aspect, there is provided the apparatus of any of the first to sixth aspects, wherein the one or more crest factor reduction processing characteristics comprise at least one of: a pulse length, a number of peak trackers, a number of crest factor reduction stages, one or more hard clipping factors, a peak qualification window size, or a clipping threshold.

According to an eighth aspect, there is provided the apparatus of any of the first to seventh aspects, wherein the one or more use case attributes comprise at least one of: a number of frequency bands, a frequency band bandwidth, a frequency band power, a frequency location, or a maximum frequency range.

According to a ninth aspect, there is provided an apparatus comprising: means for providing, to a machine learning model, input data comprising one or more values of one or more use case attributes associated with a crest factor reduction technique, wherein the machine learning model is trained for predicting configuration parameter values for one or more crest factor reduction processing characteristics of the crest factor reduction technique; means for receiving, from the machine learning model, output data comprising one or more configuration parameter values for the one or more crest factor reduction processing characteristics; and means for applying the crest factor reduction technique to one or more transmitted signals based on the output data.

According to a tenth aspect, there is provided the apparatus of the ninth aspect, wherein the machine learning model was trained by the apparatus of any of the first to eighth aspects.

According to an eleventh aspect, there is provided a method comprising selecting one or more crest factor reduction processing characteristics to be optimized for a crest factor reduction technique; collecting use case attribute data comprising a set of values of one or more use case attributes associated with the crest factor reduction technique; determining, based on the use case attribute data, a set of optimized configuration parameter values for the one or more crest factor reduction processing characteristics; generating a set of labelled training data based on the use case attribute data and the set of optimized configuration parameter values; and training, based on the set of labelled training data, a machine learning model for predicting configuration parameter values for the one or more crest factor reduction processing characteristics.

According to a twelfth aspect, there is provided a method comprising: providing, to a machine learning model, input data comprising one or more values of one or more use case attributes associated with a crest factor reduction technique, wherein the machine learning model is trained for predicting configuration parameter values for one or more crest factor reduction processing characteristics of the crest factor reduction technique; receiving, from the machine learning model, output data comprising one or more configuration parameter values for the one or more crest factor reduction processing characteristics; and applying the crest factor reduction technique to one or more transmitted signals based on the output data.

According to a thirteenth aspect, there is provided a computer program comprising instructions which, when executed by an apparatus, cause the apparatus to perform at least the following: selecting one or more crest factor reduction processing characteristics to be optimized for a crest factor reduction technique; collecting use case attribute data comprising a set of values of one or more use case attributes associated with the crest factor reduction technique; determining, based on the use case attribute data, a set of optimized configuration parameter values for the one or more crest factor reduction processing characteristics; generating a set of labelled training data based on the use case attribute data and the set of optimized configuration parameter values; and training, based on the set of labelled training data, a machine learning model for predicting configuration parameter values for the one or more crest factor reduction processing characteristics.

According to a fourteenth aspect, there is provided a computer program comprising instructions which, when executed by an apparatus, cause the apparatus to perform at least the following: providing, to a machine learning model, input data comprising one or more values of one or more use case attributes associated with a crest factor reduction technique,wherein the machine learning model is trained for predicting configuration parameter values for one or more crest factor reduction processing characteristics of the crest factor reduction technique; receiving, from the machine learning model, output data comprising one or more configuration parameter values for the one or more crest factor reduction processing characteristics; and applying the crest factor reduction technique to one or more transmitted signals based on the output data.

According to a fifteenth aspect, there is provided a system comprising at least a machine learning trainer apparatus and a wireless communication device, wherein the machine learning trainer apparatus comprises: means for selecting one or more crest factor reduction processing characteristics to be optimized for a crest factor reduction technique; means for collecting use case attribute data comprising a set of values of one or more use case attributes associated with the crest factor reduction technique; means for determining, based on the use case attribute data, a set of optimized configuration parameter values for the one or more crest factor reduction processing characteristics; means for generating a set of labelled training data based on the use case attribute data and the set of optimized configuration parameter values; and means for training, based on the set of labelled training data, a machine learning model for predicting configuration parameter values for the one or more crest factor reduction processing characteristics; wherein the wireless communication device comprises: means for providing, to the machine learning model, input data comprising one or more values of the one or more use case attributes associated with the crest factor reduction technique, wherein the machine learning model is trained for predicting the configuration parameter values for the one or more crest factor reduction processing characteristics of the crest factor reduction technique; means for receiving, from the machine learning model, output data comprising one or more configuration parameter values for the one or more crest factor reduction processing characteristics; and means for applying the crest factor reduction technique to one or more transmitted signals based on the output data.

According to a sixteenth aspect, there is provided a system comprising at least a machine learning trainer apparatus and a wireless communication device, wherein the machine learning trainer apparatus is configured to: select one or more crest factor reduction processing characteristics to be optimized for a crest factor reduction technique; collect use case attribute data comprising a set of values of one or more use case attributes associated with the crest factor reduction technique; determine, based on the use case attribute data, a set of optimized configuration parameter values for the one or more crest factor reduction processing characteristics; generate a set of labelled training data based on the use case attribute data and the set of optimized configuration parameter values; and train, based on the set of labelled training data, a machine learning model for predicting configuration parameter values for the one or more crest factor reduction processing characteristics; wherein the wireless communication device is configured to: provide, to the machine learning model, input data comprising one or more values of the one or more use case attributes associated with the crest factor reduction technique, wherein the machine learning model is trained for predicting the configuration parameter values for the one or more crest factor reduction processing characteristics of the crest factor reduction technique; receive, from the machine learning model, output data comprising one or more configuration parameter values for the one or more crest factor reduction processing characteristics; and apply the crest factor reduction technique to one or more transmitted signals based on the output data.

According to a seventeenth aspect, there is provided a method comprising performing at least one of a first process or a second process; wherein the first process comprises: selecting one or more crest factor reduction processing characteristics to be optimized for a crest factor reduction technique; collecting use case attribute data comprising a set of values of one or more use case attributes associated with the crest factor reduction technique; determining, based on the use case attribute data, a set of optimized configuration parameter values for the one or more crest factor reduction processing characteristics; generating a set of labelled training data based on the use case attribute data and the set of optimized configuration parameter values; and training, based on the set of labelled training data, a machine learning model for predicting configuration parameter values for the one or more crest factor reduction processing characteristics; wherein the second process comprises: providing, to the machine learning model, input data comprising one or more values of the one or more use case attributes associated with the crest factor reduction technique, wherein the machine learning model is trained for predicting the configuration parameter values for the one or more crest factor reduction processing characteristics of the crest factor reduction technique; receiving, from the machine learning model, output data comprising one or more configuration parameter values for the one or more crest factor reduction processing characteristics; and applying the crest factor reduction technique to one or more transmitted signals based on the output data.

According to an eighteenth aspect, there is provided a non-transitory computer readable medium comprising at least one of a first set of program instructions or a second set of program instructions; wherein the first set of program instructions, when executed by an apparatus, cause the apparatus to perform at least the following: selecting one or more crest factor reduction processing characteristics to be optimized for a crest factor reduction technique; collecting use case attribute data comprising a set of values of one or more use case attributes associated with the crest factor reduction technique; determining, based on the use case attribute data, a set of optimized configuration parameter values for the one or more crest factor reduction processing characteristics; generating a set of labelled training data based on the use case attribute data and the set of optimized configuration parameter values; and training, based on the set of labelled training data, a machine learning model for predicting configuration parameter values for the one or more crest factor reduction processing characteristics; wherein the second set of program instructions, when executed by an apparatus, cause the apparatus to perform at least the following: providing, to the machine learning model, input data comprising one or more values of the one or more use case attributes associated with the crest factor reduction technique, wherein the machine learning model is trained for predicting the configuration parameter values for the one or more crest factor reduction processing characteristics of the crest factor reduction technique; receiving, from the machine learning model, output data comprising one or more configuration parameter values for the one or more crest factor reduction processing characteristics; and applying the crest factor reduction technique to one or more transmitted signals based on the output data.

According to a nineteenth aspect, there is provided a non-transitory computer readable medium comprising program instructions, when executed by an apparatus, cause the apparatus to perform at least the following: selecting one or more crest factor reduction processing characteristics to be optimized for a crest factor reduction technique; collecting use case attribute data comprising a set of values of one or more use case attributes associated with the crest factor reduction technique; determining, based on the use case attribute data, a set of optimized configuration parameter values for the one or more crest factor reduction processing characteristics; generating a set of labelled training data based on the use case attribute data and the set of optimized configuration parameter values; and training, based on the set of labelled training data, a machine learning model for predicting configuration parameter values for the one or more crest factor reduction processing characteristics.

According to a twentieth aspect, there is provided a computer readable medium comprising program instructions, when executed by an apparatus, cause the apparatus to perform at least the following: selecting one or more crest factor reduction processing characteristics to be optimized for a crest factor reduction technique; collecting use case attribute data comprising a set of values of one or more use case attributes associated with the crest factor reduction technique; determining, based on the use case attribute data, a set of optimized configuration parameter values for the one or more crest factor reduction processing characteristics; generating a set of labelled training data based on the use case attribute data and the set of optimized configuration parameter values; and training, based on the set of labelled training data, a machine learning model for predicting configuration parameter values for the one or more crest factor reduction processing characteristics.

According to a twenty-first aspect, there is provided a non-transitory computer readable medium comprising program instructions, when executed by an apparatus, cause the apparatus to perform at least the following: providing, to a machine learning model, input data comprising one or more values of one or more use case attributes associated with a crest factor reduction technique, wherein the machine learning model is trained for predicting configuration parameter values for one or more crest factor reduction processing characteristics of the crest factor reduction technique; receiving, from the machine learning model, output data comprising one or more configuration parameter values for the one or more crest factor reduction processing characteristics; and applying the crest factor reduction technique to one or more transmitted signals based on the output data.

According to a twenty-second aspect, there is provided a computer readable medium comprising program instructions, when executed by an apparatus, cause the apparatus to perform at least the following: providing, to a machine learning model, input data comprising one or more values of one or more use case attributes associated with a crest factor reduction technique, wherein the machine learning model is trained for predicting configuration parameter values for one or more crest factor reduction processing characteristics of the crest factor reduction technique; receiving, from the machine learning model, output data comprising one or more configuration parameter values for the one or more crest factor reduction processing characteristics; and applying the crest factor reduction technique to one or more transmitted signals based on the output data.

According to a twenty-third aspect, there is provided an apparatus comprising at least one processor, and at least one memory storing instructions that, when executed by the at least one processor, cause the apparatus at least to: select one or more crest factor reduction processing characteristics to be optimized for a crest factor reduction technique; collect use case attribute data comprising a set of values of one or more use case attributes associated with the crest factor reduction technique; determine, based on the use case attribute data, a set of optimized configuration parameter values for the one or more crest factor reduction processing characteristics; generate a set of labelled training data based on the use case attribute data and the set of optimized configuration parameter values; and train, based on the set of labelled training data, a machine learning model for predicting configuration parameter values for the one or more crest factor reduction processing characteristics.

According to a twenty-fourth aspect, there is provided an apparatus comprising at least one processor, and at least one memory storing instructions that, when executed by the at least one processor, cause the apparatus at least to: provide, to a machine learning model, input data comprising one or more values of one or more use case attributes associated with a crest factor reduction technique, wherein the machine learning model is trained for predicting configuration parameter values for one or more crest factor reduction processing characteristics of the crest factor reduction technique; receive, from the machine learning model, output data comprising one or more configuration parameter values for the one or more crest factor reduction processing characteristics; and apply the crest factor reduction technique to one or more transmitted signals based on the output data.

### BRIEF DESCRIPTION OF THE DRAWINGS

In the following, various example embodiments will be described in greater detail with reference to the accompanying drawings, in which
FIG. 1 illustrates an example of a wireless communication network;
FIG. 2 illustrates a block diagram;
FIG. 3 illustrates an example of a crest factor reduction simulator;
FIG. 4 illustrates the inputs of a machine learning training module, and the input and output of a trained machine learning model;
FIG. 5 illustrates training a plurality of machine learning models with different machine learning algorithms;
FIG. 6 illustrates a flow chart;
FIG. 7 illustrates a flow chart;
FIG. 8 illustrates a flow chart;
FIG. 9 illustrates a flow chart;
FIG. 10A illustrates an example of a digital front end device with a machine learning model deployed as a software module;
FIG. 10B illustrates an example of a digital front end device with a machine learning model deployed as a hardware module;
FIG. 11A illustrates an example of error vector magnitude achieved with a legacy optimization procedure and with a trained machine learning model;
FIG. 11B illustrates an example of error vector magnitude deviation between the legacy optimization procedure and the trained machine learning model;
FIG. 11C illustrates an example of spectral emission mask margin achieved with the legacy optimization procedure and with the trained machine learning model;
FIG. 11D illustrates an example of qualification window size predicted with the trained machine learning model;
FIG. 12 illustrates an example of an apparatus;
FIG. 13 illustrates an example of an apparatus;
FIG. 14 illustrates an example of an artificial neural network; and
FIG. 15 illustrates an example of a computational node.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

Some example embodiments described herein may be implemented in a wireless communication network comprising a radio access network based on one or more of the following radio access technologies (RATs): global system for mobile communications (GSM) or any other second generation (2G) radio access technology, universal mobile telecommunication system (UMTS, 3G) based on basic wideband-code division multiple access (W-CDMA), high-speed packet access (HSPA), long term evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the evolved universal terrestrial radio access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

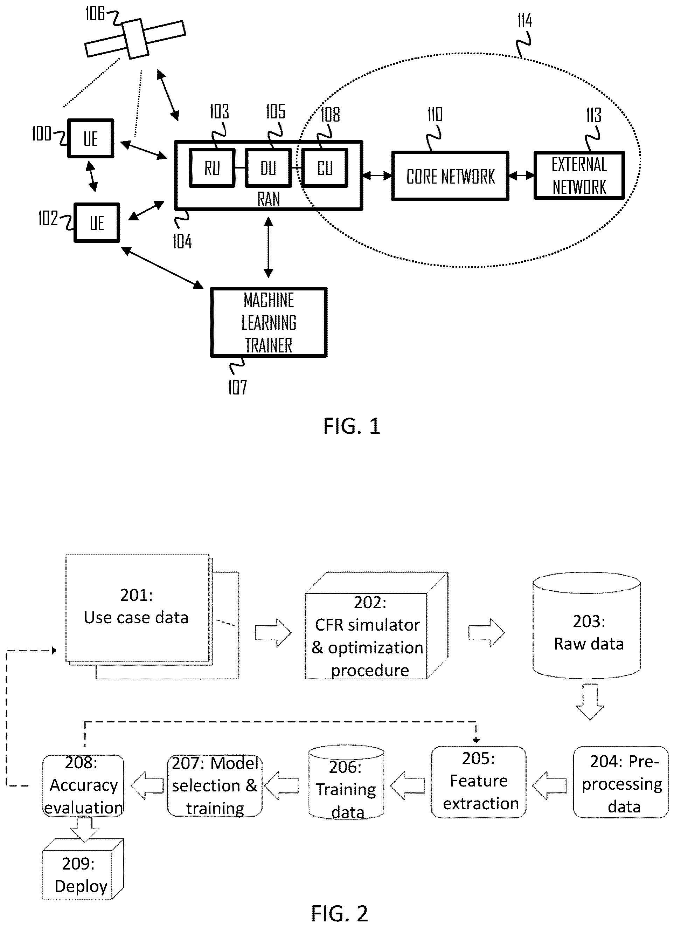

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node.

The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and/or receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: a user plane function (UPF), an access and mobility management function (AMF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) 103 comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) 103 of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, or low earth orbit (LEO) satellite systems, such as mega-constellations (i.e., systems in which hundreds of (nano)satellites are deployed). Alternatively, the satellites may be an airborne devices, such as an unmanned aerial vehicle (UAV), or a high-altitude platform system (HAPS). A given satellite 106 may provide communication services on Earth via one or more satellite beams. The one or more satellite beams create one or more cells over a given service area that may be bounded by the field of view of the satellite 106.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

6G wireless communication networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G may include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

Orthogonal frequency division multiplexing (OFDM) may be used in high-bit-rate wireless communication systems. However, the large number of subcarriers cause a high peak-to-average power ratio (PAPR) to the transmitted signal. When passing through a nonlinear device like a power amplifier (PA), the signal with high PAPR will suffer from significant spectral spreading and in-band distortion. This may be addressed, for example, by using PAs with better linear characteristics or adding a backoff to the PA operation point. However, both of these solutions reduce the power efficiency of the PA.

Crest factor reduction (CFR) is a technology used to reduce the PAPR of the transmitted signals, so that the power amplifier can operate more efficiently. However, CFR is a nonlinear processing technique and may cause in-band distortion and out-of-band emission.

There are many different CFR algorithms. Peak cancellation is one example of a CFR algorithm. It distorts the original signal by adding clipping noise, which compresses the peaks in the original signal to the expected PAPR.

When using CFR as a function model in a digital front end (DFE) system, it needs to be configurable to support different use cases. Depending on the CFR algorithm, there are use case oriented key parameters which significantly affect the CFR performance. To achieve optimal or at least near-optimal CFR performance, these parameters need to be configured precisely. Improper configuration of these key parameters degrades the CFR performance or may even fail the product performance criteria.

CFR optimization techniques may be used to determine the optimal value of one or more CFR processing characteristics by iteratively adjusting the values according to one or more optimization criteria. However, the legacy CFR optimization techniques are not suitable for online optimization, because they need to repeat processing the input signal several times to test different values of some CFR processing characteristics against certain performance criteria. The legacy CFR optimization techniques may run the optimization procedure offline to get optimal values of known use cases, and then pre-store the determined CFR characteristics values to the CFR system for selection. Therefore, the legacy CFR optimization techniques can only support a small amount of known use cases. Furthermore, the legacy CFR optimization techniques cannot predict optimal values for any un-predetermined use cases (i.e., new use cases) which have not been run through the optimization procedure.

Machine Learning (ML) is a field of study in artificial intelligence. Machine learning models learn from data and generalize to unseen data, thus being able to perform tasks without explicit instructions. Machine learning may help in configuring CFR more precisely to improve CFR performance, and also to predict optimal (or at least near-optimal) values for new use cases.

Some example embodiments utilize machine learning (e.g., supervised learning) to learn the relationship or logic between CFR use case attributes and the optimal value of the CFR processing characteristics based on a large amount of use cases (e.g., a hundred or more use cases). The use case attributes which can affect the optimal value of the CFR processing characteristics may include, for example, at least one of: number of bands, band bandwidths, band powers, band frequency locations, etc.

According to the use case attributes, the trained ML model can predict the optimal or at least near-optimal value of the CFR processing characteristics, instead of running an offline optimization procedure from scratch. With the trained ML model, it is possible to avoid running a real-time iterative optimization procedure. Thus, a short execution time can be achieved, which is beneficial for online configuration and reconfiguration. Furthermore, the trained ML model can predict the optimal configuration of any arbitrary use cases. For example, the trained ML model is capable of predicting the optimal configuration of the un-predetermined use cases (e.g., new use cases which are not included in the training use cases.).

The example embodiments described below may help to avoid significant performance degradation caused by an improper sparsification configuration, for example. Furthermore, the example embodiments may improve error vector magnitude and throughput. Moreover, some example embodiments may ensure that the spectral emission mask limit requirement is met even in very difficult scenarios, while minimizing the error vector magnitude degradation.

FIG. 2 illustrates a block diagram according to an example embodiment for training a machine learning model for predicting optimal or near-optimal configuration parameter values for one or more crest factor reduction processing characteristics.

The training of the machine learning model may be performed by a machine learning trainer apparatus 107. The machine learning trainer apparatus 107 comprises a central processing unit (CPU) configured to execute one or more machine learning algorithms and manage data processing tasks. The machine learning trainer apparatus 107 includes a memory unit for storing training data, model parameters, and intermediate computation results. The machine learning trainer apparatus 107 may be equipped with multiple input interfaces to receive diverse datasets from various sources, such as sensors, databases, and user inputs. A graphical processing unit (GPU) or tensor processing unit (TPU) may be integrated to the machine learning trainer apparatus 107 to accelerate the training of complex models, such as deep learning networks. The machine learning trainer apparatus 107 may feature a user interface module that allows users to configure training parameters, monitor training progress, and visualize performance metrics. The machine learning trainer apparatus 107 may incorporate a feedback mechanism to adjust model parameters dynamically based on real-time performance evaluation. This feedback loop ensures continuous improvement and optimization of the machine learning models. The machine learning trainer apparatus 107 may support various communication protocols to facilitate data exchange with external systems and cloud-based platforms.

Referring to FIG. 2, in block 201, use case attribute data is collected. The use case attribute data comprises a set of values of one or more use case attributes associated with a crest factor reduction technique (or algorithm). A use case defines a usage scenario in which a user (e.g., a communications service provider) would like to use a wireless communication device. Different use cases refer to different values of the one or more use case attributes. In other words, the use case attribute data may comprise a plurality of different values for each use case attribute of the one or more use case attributes, in order to define multiple different use cases.

For example, the one or more use case attributes may comprise at least one of: a number of frequency bands, a frequency band bandwidth, a frequency band power, a frequency location, or a maximum frequency range (also called instance bandwidth).

The number of frequency bands refers to the total count of distinct frequency ranges used in the communication system. Multiple frequency bands can be utilized to transmit different signals simultaneously, improving overall system capacity.

The frequency band bandwidth is the width of each frequency band, for example measured in Hertz (Hz). The frequency band bandwidth indicates the range of frequencies that a particular frequency band covers. Wider bandwidths can carry more data but may also require more sophisticated signal processing.

The frequency band power represents the power level allocated to each frequency band. Higher power levels can improve signal strength and coverage, but may also increase the risk of interference with other signals.

The frequency location refers to the specific position of a frequency band within the overall frequency spectrum. The frequency location can affect signal propagation characteristics and potential interference with other frequency bands.

The maximum frequency range is the highest frequency that the wireless communication system or device can handle. The maximum frequency range defines the upper limit of the system's operational frequency range and can impact the types of applications and services that can be supported.

As a non-limiting example, one use case may include frequency bands = 10 MHz, and frequency location = 800 MHz. Another use case may include frequency bands = 20 MHz and 50 MHz, and frequency locations = 700 MHz and 800 MHz.

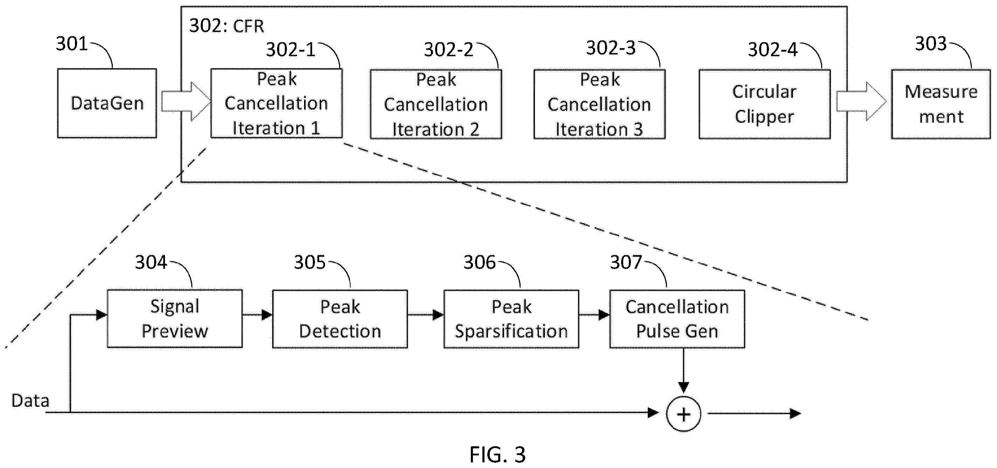

In block 202, based on the use case attribute data, a set of optimized configuration parameter values for one or more crest factor reduction processing characteristics is determined. The set of optimized configuration parameter values may comprise an optimized configuration parameter value for each crest factor reduction processing characteristic of the one or more crest factor reduction processing characteristics. In this way, the optimal configuration for each use case is determined. In other words, the use case attribute data may be used to run the CFR processing, and an optimization procedure may be applied to determine the set of optimized configuration parameter values for the one or more crest factor reduction processing characteristics. For example, the CFR processing can be run on a virtual CFR simulator or on hardware (e.g., a DFE device). An example of a CFR simulator 302 is shown in FIG. 3. The optimization procedure may comprise, for example: adjusting the CFR processing characteristic(s) according to one or more optimization criteria, testing different values of the CFR processing characteristic(s), and selecting the best value according to one or more performance metrics. For example, the one or more performance metrics used in block 202 may comprise an error vector magnitude (EVM) and/or emission performance (e.g., a deviation to a spectral emission mask limit).

EVM measures the difference between the ideal transmitted signal and the actual received signal in a communication system. EVM quantifies how much the received signal deviates from the ideal constellation points due to various imperfections like noise, distortion, and phase noise.

For example, the one or more crest factor reduction processing characteristics may comprise at least one of: a pulse length, a number of peak trackers, a number of crest factor reduction stages, one or more hard clipping factors, a peak qualification window size, a clipping threshold, a number of enabled peak cancellation stages (stage bypass), an out of band noise dumping configuration (in/out band gain, iteration thresholds, etc.), empty physical resource block noise gain in partial load, a clipping threshold and drain voltage modulation control in partial load, or a baseband clipper threshold.

The pulse length refers to the duration of the pulses used in the CFR process. Longer pulses can smooth out peaks more effectively but may also introduce more distortion.

The number of peak trackers indicates the number of mechanisms used to identify and track signal peaks that need to be reduced. More peak trackers can improve the accuracy of peak identification.

The number of crest factor reduction stages refers to the number of sequential steps or iterations applied to reduce the crest factor. Multiple stages can progressively lower the PAPR more effectively.

Hard clipping factors are parameters that define the extent to which signal peaks are clipped. Hard clipping can significantly reduce peaks but may introduce distortion and unwanted emissions.

The peak qualification window size defines the length of a data segment in which only the maximum magnitude sample is qualified as a peak.

The clipping threshold is the level above which signal peaks are clipped. Setting an appropriate threshold is beneficial to achieve a balance between reducing peaks and minimizing signal distortion.

In block 203, the use case attribute data and the set of optimized configuration parameter values are stored as raw data (e.g., in an internal memory of the machine learning trainer apparatus). The raw data may possibly also include the value(s) of the one or more measured performance metrics (e.g., EVM and/or SEM).

In block 204, the raw data is pre-processed in order to refine the training data. Pre-processing the raw data may involve a series of steps to clean and transform the data into a format suitable for training an ML model. For example, the pre-processing may include at least one of: data cleaning (removing or correcting errors, missing values, and inconsistencies in the data), or normalization/scaling (adjusting the data to a common scale, for example between 0 and 1, to ensure that all features contribute equally to the ML model).

Labels may also be added to the raw data. Labeling refers to the process of assigning meaningful tags or categories to data points. These labels are used to train supervised learning models, which learn to make predictions or classifications based on the labeled data. Labeling provides the ground truth that the ML model uses to learn patterns and make accurate predictions.

In block 205, a set of features is extracted from the pre-processed data. Feature extraction in machine learning refers to the process of transforming the raw (pre-processed) data into a set of measurable characteristics, or "features," that can be used to train an ML model. This helps to simplify the data, reduce its dimensionality, and highlight the most important aspects that contribute to the predictive power of the ML model. By focusing on these key features, the machine learning model can more effectively learn patterns and make accurate predictions.

In block 206, a set of labelled training data is generated based on the extracted set of features.

In block 207, a machine learning model is selected and trained based on the set of labelled training data for predicting configuration parameter values for the one or more crest factor reduction processing characteristics.

In one embodiment, a plurality of machine learning models may be trained for predicting configuration parameter values for the one or more crest factor reduction processing characteristics, wherein each machine learning model of the plurality of machine learning models may be trained with a different supervised machine learning algorithm. The performance of the plurality of machine learning models may then be compared, and one of the machine learning models may be selected from the plurality of machine learning models based on the comparison (e.g., the machine learning model with the best performance may be selected).

In block 208, the performance (or accuracy) of the selected machine learning model is evaluated to determine whether the performance of the selected machine learning model fulfils one or more performance criteria. The evaluation of the performance is based on a different set of values of the one or more use case attributes than the set of values used for generating the set of labelled training data. In other words, the evaluation may use the same use case attributes that were used for generating the training data, but with different values than the values used for generating the training data.

For example, the one or more performance criteria may comprise at least one of: a deviation to a reference error vector magnitude (EVM) being less than a first pre-defined threshold, and/or a margin to a spectral emission mask limit being greater than a second pre-defined threshold. The reference error vector magnitude may refer to the EVM determined in block 202 for the set of optimized configuration parameter values.

In block 209, based on determining that the performance of the machine learning model fulfils the one or more performance criteria, the machine learning model is deployed to a wireless communication device, such as a UE 100, 102 or a base station 104.

Alternatively, if the performance of the machine learning model does not fulfil the one or more performance, then the process may return to block 201 to collect additional use case attribute data, or to block 205 for regenerating the set of labelled training data based on a different set of features from the use case attribute data compared to the set of features used for generating the set of labelled training data previously used for training the machine learning model (e.g., to select different features or combine some features or remove some features). That is, blocks 201 to 208 or blocks 205 to 208 may be performed iteratively until the performance of the machine learning model fulfils the one or more performance criteria.

FIG. 3 illustrates an example of a CFR simulator 302. Although three peak cancellation stages 302-1, 302-2, 302-3 (peak cancellation iteration 1, peak cancellation iteration 2, peak cancellation iteration 3) are shown in FIG. 3, it should be noted that the number of peak cancellation stages may also be different than three. In other words, there may be one or more peak cancellation stages.

In FIG. 3, the data generator block 301 represents the data generation process, where initial data is created for the simulation.

The CFR block 302 includes three iterative steps: a first peak cancellation 302-1, a second peak cancellation iteration 302-2, and a third peak cancellation iteration 302-3. These iterations progressively reduce the peaks in the signal to improve power efficiency and reduce distortion.

The circular clipper 302-4 limits the signal to a certain threshold, further reducing peaks and ensuring that the signal stays within desired limits.

The signal preview block 304 within a given peak cancellation iteration 302-1, 302-2, 302-3 provides a preview of the signal, allowing for initial assessment before further processing.

The peak detection block 305 within a given peak cancellation iteration 302-1, 302-2, 302-3 identifies the peaks in the signal above a threshold which is determined by the target PAPR.

The peak sparsification block 306 within a given peak cancellation iteration 302-1, 302-2, 302-3 reduces the number of peaks by spreading them out, making the signal easier to process. In other words, the identified peaks are sparsified, so that in a specific length of segment only the maximum magnitude peak is selected. The sparsification function affects the EVM and emission performance of peak cancellation CFR a lot. The length of the segment is known as the window length. A too small window may cause over-clipping, which increases the EVM. On the other hand, a too wide window may cause peak leakage, which must be handled by the circular clipper 302-4 or hard clipper at the last stage, which does not have good spectrum performance. Selecting the proper window length in Peak Cancellation CFR therefore has a significant effect on the CFR performance.

The cancellation pulse generator block 307 within a given peak cancellation iteration 302-1, 302-2, 302-3 generates a peak cancellation pulse according to the identified peaks. The peak cancellation pulse is added to the original signal to reduce the signal PAPR, contributing to the crest factor reduction.

The measurement block 303 measures the effectiveness or performance of the crest factor reduction process, providing feedback for further optimization.

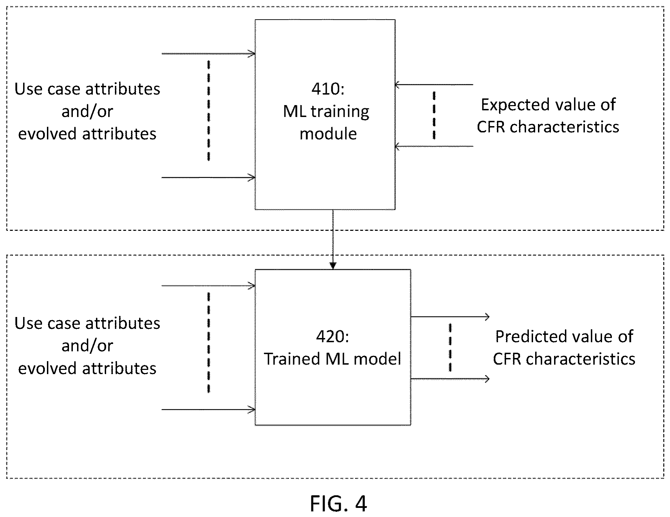

FIG. 4 illustrates the inputs of the ML training module 410, and the input and output of the trained ML model 420. The ML training module 410 may be comprised in the machine learning trainer apparatus 107.

The input data (training data) of the ML training module 410 comprises the use case attribute data and the set of optimized configuration parameter values for the one or more crest factor reduction processing characteristics. The input may possibly also comprise evolved use case attribute data, i.e., new use case attributes created based on the (original) use case attributes. The set of optimized configuration parameter values teach the ML model 420 what the predicted values should be.

The input data of the trained ML model 420 (trained by the ML training module 410) comprises use case attribute data, which may comprise use case attribute values that are different from the set of use case attribute values used in the ML training module 410. The input may possibly also comprise evolved use case attribute data, i.e., new use case attributes created based on the use case attributes. The output of the trained ML model 420 comprises configuration parameter values for the one or more crest factor reduction processing characteristics.

One example of an evolved use case attribute is frequency band distance, which can be evolved or derived from the frequency location and the frequency band bandwidth. Another example of an evolved use case attribute is the power ratio between narrow bands and wide bands, which can be evolved or derived from the frequency band power.

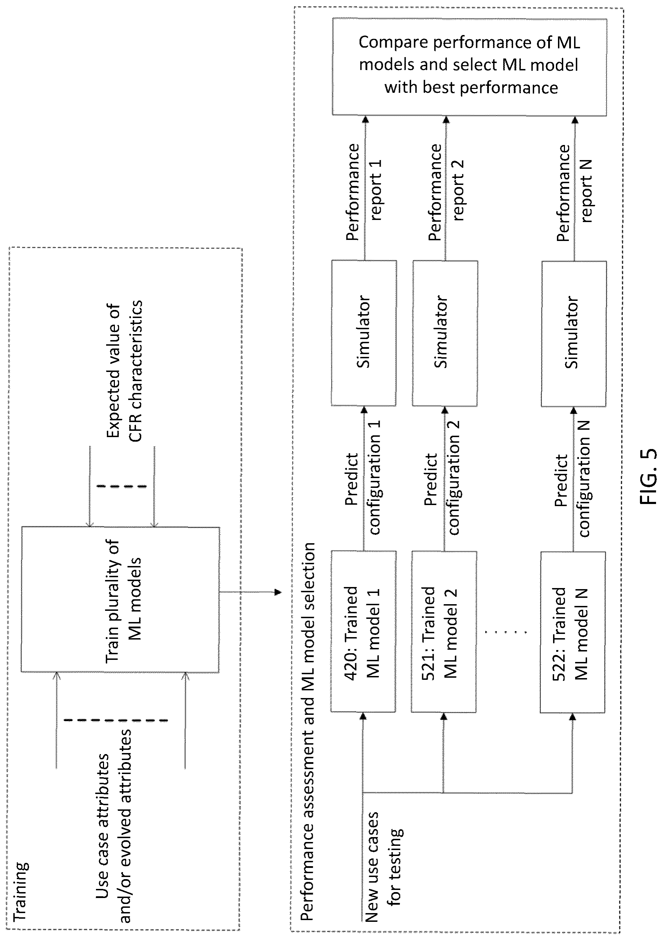

FIG. 5 illustrates training a plurality machine learning models 420, 521, 522 with different machine learning algorithms (e.g., with different supervised machine learning algorithms). As a non-limiting example, a first ML model 420 of the plurality of ML models may be trained with a k-nearest neighbours (KNN) algorithm, a second ML model 521 of the plurality of ML models may be trained with a random forest algorithm, and a third ML model 522 of the plurality of ML models may be trained with an artificial neural network. Depending on discrete or continuous value, different ML algorithms from classification ML algorithms or regression ML algorithms may be tried. The final algorithm is decided according to the performance assessment (accuracy evaluation) of the plurality of trained machine learning models 420, 521, 522.

For evaluating the performance of the ML models 420, 521, 522, different use case attribute values may be used compared to the use case attribute values used for training the ML models 420, 521, 522 to see how well the ML models 420, 521, 522 adapt to new use cases. The predicted configuration parameter values of each ML model 420, 521, 522 are provided as input to a CFR simulator (e.g., the CFR simulator 302), which evaluates the performance of each ML model 420, 521, 522 based on the configuration parameter values outputted by that respective ML model. Based on the simulations, the performance of the ML models 420, 521, 522 are compared according to one or more performance criteria (e.g., EVM and/or SEM). The ML model that provides the best performance in all the test use cases is then selected from the plurality of ML models 420, 521, 522.

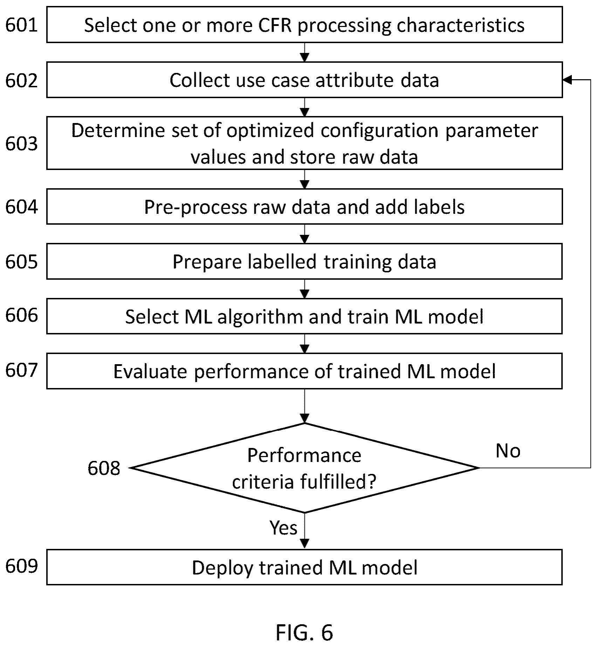

FIG. 6 illustrates a flow chart according to an example embodiment of a method for training a machine learning model for predicting optimal or near-optimal configuration parameter values for one or more crest factor reduction processing characteristics. The method of FIG. 6 may be performed by an apparatus such as the machine learning trainer apparatus 107.

Referring to FIG. 6, in block 601, the machine learning trainer apparatus 107 selects one or more crest factor reduction processing characteristics to be optimized for a crest factor reduction technique or algorithm. For example, the one or more crest factor reduction processing characteristics may be selected based on a user input received from a user (e.g., a CFR specialist) via a user interface (e.g., graphical user interface) of the machine learning trainer apparatus 107. The optimal value of the one or more crest factor reduction processing characteristics may vary among different use cases.

The selection of the one or more crest factor reduction processing characteristics may depend on the crest factor reduction algorithm being used. For example, the crest factor reduction algorithm may include: a clipping and filtering algorithm or any of its variants, a peak windowing algorithm or any of its variants, or a peak cancellation algorithm or any of its variants.

For example, the one or more crest factor reduction processing characteristics may comprise (but are not limited to) at least one of: a pulse length, a number of peak trackers, a number of crest factor reduction stages, one or more hard clipping factors, a peak qualification window size (which determines the length of the data segment in which only the maximum magnitude sample is qualified as the peak), or a clipping threshold.

As a non-limiting example, the peak qualification window size may be selected as a crest factor reduction processing characteristic for the peak cancellation algorithm.

In block 602, the machine learning trainer apparatus 107 collects use case attribute data comprising a set of values of one or more use case attributes associated with the crest factor reduction technique. For example, the use case attribute data may be collected by manually adjusting the values of the one or more use case attributes, or by constrained randomization techniques.

For example, the one or more use case attributes may comprise at least one of: a number of frequency bands, a frequency band bandwidth, a frequency band power, a frequency location, or a maximum frequency range.

In block 603, the machine learning trainer apparatus 107 determines, based on the use case attribute data, a set of optimized configuration parameter values for the one or more crest factor reduction processing characteristics. The one or more crest factor reduction processing characteristics may have a significant effect on the CFR performance, but there may not be any explicit formula for calculating the optimal values. Thus, the set of optimized configuration parameter values for the one or more crest factor reduction processing characteristics may be determined, for example, by iteratively adjusting the configuration parameter values of the one or more CFR processing characteristics with a CFR simulator or on a hardware device, and the optimal values may be identified based on a comparison of one or more performance metrics (e.g., EVM and/or SEM) achieved with the values.

In other words, the use case attribute data may be used to run the CFR processing, and an optimization procedure may be applied to determine the set of optimized configuration parameter values for the one or more crest factor reduction processing characteristics. For example, the CFR processing can be run on a virtual CFR simulator or on hardware (e.g., a DFE device). An example of a CFR simulator 302 is shown in FIG. 3. The optimization procedure may comprise, for example: adjusting the CFR processing characteristic(s) according to one or more optimization criteria, testing different values of the CFR processing characteristic(s), selecting the best value according to the one or more performance metrics, etc.

The use case attribute data and the set of optimized configuration parameter values are stored as raw data. The raw data may possibly also include the value(s) of the one or more measured performance metrics.

In block 604, labels are added to the raw data. The labels distinguish the use cases which achieve the optimal performance with different values of the one or more CFR processing characteristics. For example, the label format may be text or a numerical value. As an example, the optimal value of the qualification window size may be used as a label for classification, such that the optimal qualification window size of each use case is added as a label (e.g., as an integer number) to the corresponding use case (i.e., to the corresponding use case attribute value(s)).

In block 605, the machine learning trainer apparatus 107 prepares or generates a set of labelled training data based on the use case attribute data and the set of optimized configuration parameter values (i.e., based on the raw data including the labels added in block 604). The raw data may be grouped and the number of use case attributes may be reduced to ease the model training.

A set of the most relevant features may be identified or extracted from the raw data for generating the set of labelled training data. The features may be use case attributes or new attributes evolved (or derived) from the original use case attributes. The feature extraction and reduction may use, for example, principal component analysis (PCA), singular value decomposition (SVD), linear discriminant analysis (LDA), or locally linear embedding (LLE). The labels may be updated because of re-grouping the raw data. For instance, one or more features may be reduced.

In block 606, the machine learning trainer apparatus 107 selects a machine learning algorithm and uses the selected machine learning algorithm to train a machine learning model based on the set of labelled training data for predicting configuration parameter values for the one or more crest factor reduction processing characteristics.

Different supervised machine learning algorithms from classification ML algorithms or regression ML algorithms may be tried by training a plurality of ML models, such that each ML model is trained with a different ML algorithm. The final machine learning algorithm may be selected according to an accuracy evaluation (e.g., the machine learning algorithm that produces the most accurate machine learning model may be selected).

In block 607, the machine learning trainer apparatus 107 evaluates a performance (or accuracy) of the trained machine learning model (selected from the plurality of ML models). The evaluation of the performance may be based on a different set of values of the one or more use case attributes than the set of values used for generating the set of labelled training data. In other words, use cases different from the training use cases may be used to evaluate the performance (or accuracy) of the trained machine learning model.

In block 608, the machine learning trainer apparatus 107 determines whether the performance (or accuracy) of the trained machine learning model fulfils one or more performance criteria. The achievable optimal performance obtained with the optimization procedure(s) of block 603 may be used as a reference for the performance evaluation. The performance obtained with the predicted configuration parameter values may be compared with the reference performance against one or more performance criteria.

For example, the one or more performance criteria may comprise at least one of: a deviation to a reference error vector magnitude (EVM) being less than a first pre-defined threshold (e.g., less than 0.1 %), and/or a margin to a spectral emission mask (SEM) limit being greater than a second pre-defined threshold (e.g., greater than 3 dB).

The deviation to the spectral emission mask limit refers to the difference between the actual spectral emissions of a signal and the limit defined by the SEM. The SEM is a regulatory standard that specifies the maximum allowable power levels at different frequencies to ensure that a signal does not interfere with other communications. For example, in this context, a margin greater than 3 dB means that the actual emissions are at least 3dB below the maximum allowable level set by the SEM. This indicates that the signal is well within the acceptable limits, reducing the risk of interference with other signals.

In block 609, based on determining that the trained machine learning model fulfils the one or more performance criteria (block 608: yes), the machine learning trainer apparatus 107 deploys the trained machine learning model to a wireless communication device, such as UE 100 or a base station 104.

For example, the machine learning trainer apparatus 107 may transmit the trained machine learning model to the wireless communication device 100, 104 for deploying the trained machine learning model as a software module in the wireless communication device 100, 104. As another example, the trained machine learning model may be deployed as a hardware module in the wireless communication device 100, 104.

Alternatively, based on determining that the trained machine learning model does not fulfil the one or more performance criteria (block 608: no), the process returns to block 602. In this case, the machine learning trainer apparatus 107 collects additional use case attribute data; generates an additional set of labelled training data based on the additional use case attribute data; and repeats the training of the machine learning model based on the additional set of labelled training data. That is, the additional use case attribute data may be used to determine an additional set of optimized configuration parameter values for the one or more crest factor reduction processing characteristics, and the additional use case attribute data and the additional set of optimized configuration parameter values may be used to generate the additional set of labelled training data, based on which the training may be repeated. The additional use case attribute data may comprise a different set of values of the one or more use case attributes, and/or an additional set of values of one or more other (evolved) use case attributes. Thus, blocks 602 to 608 may be repeated iteratively until the performance of the trained machine learning model fulfils the one or more performance criteria.

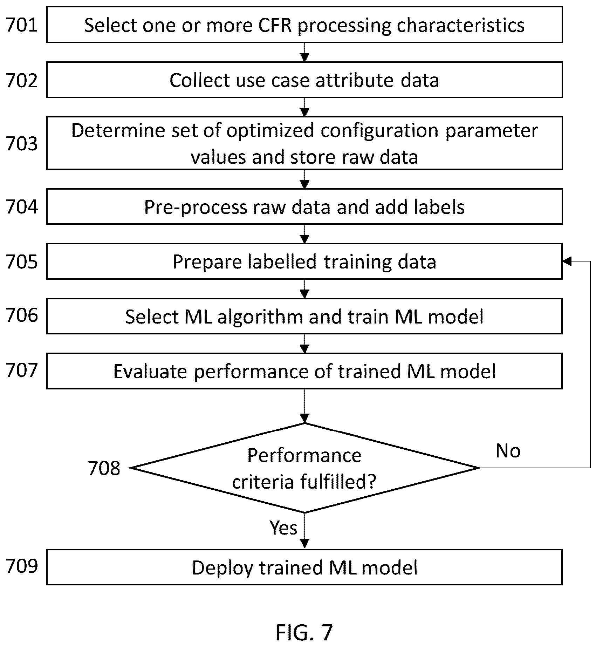

FIG. 7 illustrates a flow chart according to an example embodiment of a method for training a machine learning model for predicting optimal or near-optimal configuration parameter values for one or more crest factor reduction processing characteristics. The method of FIG. 7 may be performed by an apparatus such as the machine learning trainer apparatus 107.

Referring to FIG. 7, in block 701, the machine learning trainer apparatus 107 selects one or more crest factor reduction processing characteristics to be optimized for a crest factor reduction technique or algorithm. The optimal value of the one or more crest factor reduction processing characteristics may vary among different use cases.

The selection of the one or more crest factor reduction processing characteristics may depend on the crest factor reduction algorithm being used. For example, the crest factor reduction algorithm may include: a clipping and filtering algorithm or any of its variants, a peak windowing algorithm or any of its variants, or a peak cancellation algorithm or any of its variants.

For example, the one or more crest factor reduction processing characteristics may comprise (but are not limited to) at least one of: a pulse length, a number of peak trackers, a number of crest factor reduction stages, one or more hard clipping factors, a peak qualification window size (which determines the length of the data segment in which only the maximum magnitude sample is qualified as the peak), or a clipping threshold.

As a non-limiting example, the peak qualification window size may be selected as a crest factor reduction processing characteristic for the peak cancellation algorithm.

In block 702, the machine learning trainer apparatus 107 collects use case attribute data comprising a set of values of one or more use case attributes associated with the crest factor reduction technique. For example, the use case attribute data may be collected by manually adjusting the values of the one or more use case attributes, or by constrained randomization techniques.

For example, the one or more use case attributes may comprise at least one of: a number of frequency bands, a frequency band bandwidth, a frequency band power, a frequency location, or a maximum frequency range.

In block 703, the machine learning trainer apparatus 107 determines, based on the use case attribute data, a set of optimized configuration parameter values for the one or more crest factor reduction processing characteristics.

In other words, the use case attribute data may be used to run the CFR processing, and an optimization procedure may be applied to determine the set of optimized configuration parameter values for the one or more crest factor reduction processing characteristics. For example, the CFR processing can be run on a virtual CFR simulator or on hardware (e.g., a DFE device). An example of a CFR simulator 302 is shown in FIG. 3. The optimization procedure may comprise, for example: adjusting the CFR processing characteristic(s) according to one or more optimization criteria, testing different values of the CFR processing characteristic(s), selecting the best value according to the one or more performance metrics, etc.

The use case attribute data and the set of optimized configuration parameter values are stored as raw data. The raw data may possibly also include the value(s) of the one or more measured performance metrics.

In block 704, labels are added to the raw data. The labels distinguish the use cases which achieve the optimal performance with different values of the one or more CFR processing characteristics. For example, the label format may be text or a numerical value. As an example, the optimal value of the qualification window size may be used as a label for classification.

In block 705, the machine learning trainer apparatus 107 prepares or generates a set of labelled training data based on the use case attribute data and the set of optimized configuration parameter values (i.e., based on the raw data including the labels added in block 704). A set of the most relevant features may be identified or extracted from the raw data for generating the set of labelled training data. The features may be use case attributes or new attributes evolved from the original use case attributes. The feature extraction and reduction may use, for example, principal component analysis (PCA), singular value decomposition (SVD), linear discriminant analysis (LDA), or locally linear embedding (LLE). The labels may be updated because of re-grouping the raw data. For instance, one or more features may be reduced.

In block 706, the machine learning trainer apparatus 107 selects a machine learning algorithm and uses the selected machine learning algorithm to train a machine learning model based on the set of labelled training data for predicting configuration parameter values for the one or more crest factor reduction processing characteristics.

Different supervised machine learning algorithms from classification ML algorithms or regression ML algorithms may be tried by training a plurality of ML models, such that each ML model is trained with a different ML algorithm. The final machine learning algorithm may be selected according to an accuracy evaluation (e.g., the machine learning algorithm that produces the most accurate machine learning model may be selected).

In block 707, the machine learning trainer apparatus 107 evaluates a performance (or accuracy) of the trained machine learning model (selected from the plurality of ML models). The evaluation of the performance may be based on a different set of values of the one or more use case attributes than the set of values used for generating the set of labelled training data. In other words, use cases different from the training use cases may be used to evaluate the performance (or accuracy) of the trained machine learning model.

In block 708, the machine learning trainer apparatus 107 determines whether the performance (or accuracy) of the trained machine learning model fulfils one or more performance criteria. The achievable optimal performance obtained with the optimization procedures of block 703 may be used as a reference for the performance evaluation. The performance obtained with the predicted configuration parameter values may be compared with the reference performance against one or more performance criteria.

For example, the one or more performance criteria may comprise at least one of: a deviation to a reference error vector magnitude (EVM) being less than a first pre-defined threshold (e.g., less than 0.1 %), and/or a margin to a spectral emission mask (SEM) limit being greater than a second pre-defined threshold (e.g., greater than 3 dB).

The deviation to the reference EVM being less than the first pre-defined threshold means that the difference between the reference EVM (value) and the EVM (value) achieved with the configuration parameter values predicted by the trained machine learning model should be lower than the first pre-defined threshold.

The deviation to the spectral emission mask limit refers to the difference between the actual spectral emissions of a signal and the limit defined by the SEM. The SEM is a regulatory standard that specifies the maximum allowable power levels at different frequencies to ensure that a signal does not interfere with other communications. For example, in this context, a margin greater than 3 dB means that the actual emissions are at least 3dB below the maximum allowable level set by the SEM. This indicates that the signal is well within the acceptable limits, reducing the risk of interference with other signals.

In block 709, based on determining that the trained machine learning model fulfils the one or more performance criteria (block 708: yes), the machine learning trainer apparatus 107 deploys the trained machine learning model to a wireless communication device, such as UE 100 or a base station 104.

For example, the machine learning trainer apparatus 107 may transmit the trained machine learning model to the wireless communication device 100, 104 for deploying the trained machine learning model as a software module in the wireless communication device 100, 104. As another example, the trained machine learning model may be deployed as a hardware module in the wireless communication device 100, 104.

Alternatively, based on determining that the trained machine learning model does not fulfil the one or more performance criteria (block 708: no), the process returns to block 705. In this case, the machine learning trainer apparatus 107 regenerates the set of labelled training data based on a different set of features from the use case attribute data compared to a set of features used for generating the set of labelled training data previously used for training the machine learning model; and repeats the training of the machine learning model based on the regenerated set of labelled training data. Thus, one or more features may be added to or removed from the list of most relevant features, which are the inputs of the model training and the ML model itself. Then the training data may be regenerated according to the new feature (or attribute) list. In other words, blocks 705 to 708 may be repeated iteratively until the performance of the trained machine learning model fulfils the one or more performance criteria.

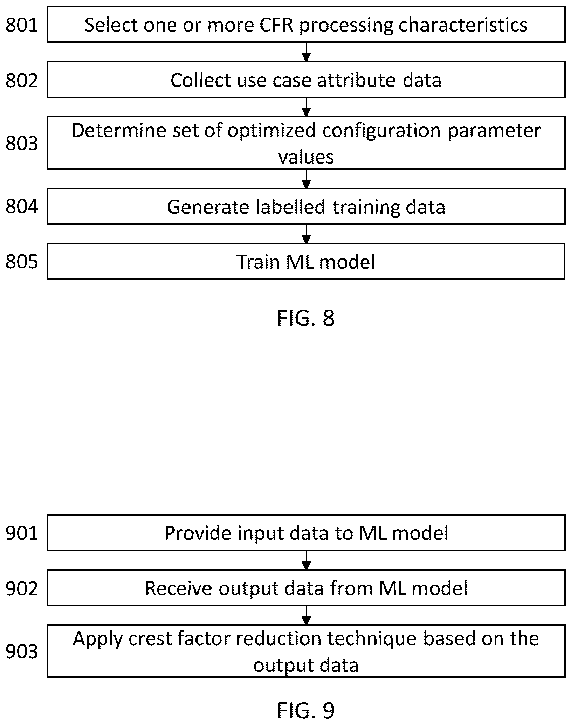

FIG. 8 illustrates a flow chart according to an example embodiment of a method for training a machine learning model for predicting optimal or near-optimal configuration parameter values for one or more crest factor reduction processing characteristics. The method of FIG. 8 may be performed by an apparatus such as the machine learning trainer apparatus 107.

Referring to FIG. 8, in block 801, the machine learning trainer apparatus 107 selects one or more crest factor reduction processing characteristics to be optimized for a crest factor reduction technique. The one or more crest factor reduction processing characteristics may be selected based on user input, for example.

For example, the one or more crest factor reduction processing characteristics may comprise at least one of: a pulse length, a number of peak trackers, a number of crest factor reduction stages, one or more hard clipping factors, a peak qualification window size, or a clipping threshold.

In block 802, the machine learning trainer apparatus 107 collects use case attribute data comprising a set of values of one or more use case attributes associated with the crest factor reduction technique.

For example, the one or more use case attributes may comprise at least one of: a number of frequency bands, a frequency band bandwidth, a frequency band power, a frequency location, or a maximum frequency range.

In block 803, the machine learning trainer apparatus 107 determines, based on the use case attribute data, a set of optimized configuration parameter values for the one or more crest factor reduction processing characteristics.

In block 804, the machine learning trainer apparatus 107 generates a set of labelled training data based on the use case attribute data and the set of optimized configuration parameter values.

In block 805, the machine learning trainer apparatus 107 trains, based on the set of labelled training data, a machine learning model for predicting configuration parameter values for the one or more crest factor reduction processing characteristics.

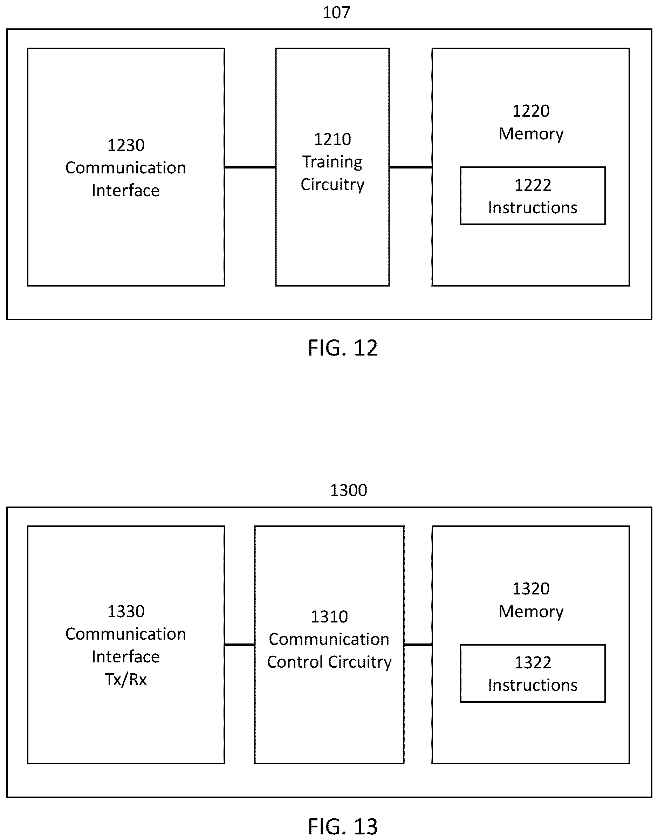

FIG. 9 illustrates a flow chart according to an example embodiment of a method for training a machine learning model for predicting optimal or near-optimal configuration parameter values for one or more crest factor reduction processing characteristics. The method of FIG. 9 may be performed by an apparatus 1300 depicted in FIG. 13. For example, the apparatus 1300 may be, or comprise, or be comprised in, a wireless communication device, such as a user equipment 100 or a base station (access node) 104.

Referring to FIG. 9, in block 901, the apparatus 1300 provides, to a trained machine learning model, input data comprising one or more values of one or more use case attributes associated with a crest factor reduction technique. For example, the input data may comprise one or more values of each use case attribute of the one or more use case attributes.

The trained machine learning model is pre-trained (e.g., by the machine learning trainer apparatus 107) for predicting configuration parameter values for one or more crest factor reduction processing characteristics of the crest factor reduction technique.

For example, the one or more use case attributes may comprise at least one of: a number of frequency bands, a frequency band bandwidth, a frequency band power, a frequency location, or a maximum frequency range.

For example, the one or more crest factor reduction processing characteristics may comprise at least one of: a pulse length, a number of peak trackers, a number of crest factor reduction stages, one or more hard clipping factors, a peak qualification window size, or a clipping threshold.

In block 902, based on providing the input data, the apparatus 1300 receives, from the trained machine learning model, output data comprising one or more configuration parameter values for the one or more crest factor reduction processing characteristics. For example, the output data may comprise a configuration parameter value for each crest factor reduction processing characteristic of the one or more crest factor reduction processing characteristics.

In block 903, the apparatus 1300 applies the crest factor reduction technique to one or more transmitted signals based on the output data. The input data provided to the machine learning model may correspond to a use case in which the one or more signals are to be transmitted, and thus the output data may comprise optimal or at least near-optimal configuration parameter value(s) that are used for applying the crest factor reduction technique for this use case.

The blocks, related functions, and information exchanges (messages) described above by means of FIGS. 6 to 9 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

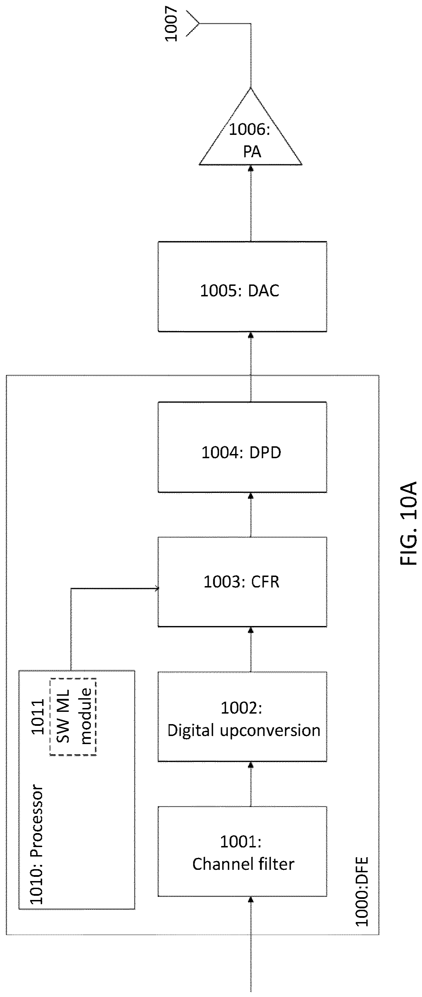

FIG. 10A illustrates an example of a DFE device 1000, wherein the trained machine learning model 420 is deployed as a software module 1011 and processed by a processor 1010. The configuration parameter values predicted by the trained machine learning model are loaded to the CFR processing module 1003 (i.e., the software module 1011 assists the CFR processing module 1003). The DFE device 1000 may be comprised in a wireless communication device, such as a UE 100 or a base station 104.

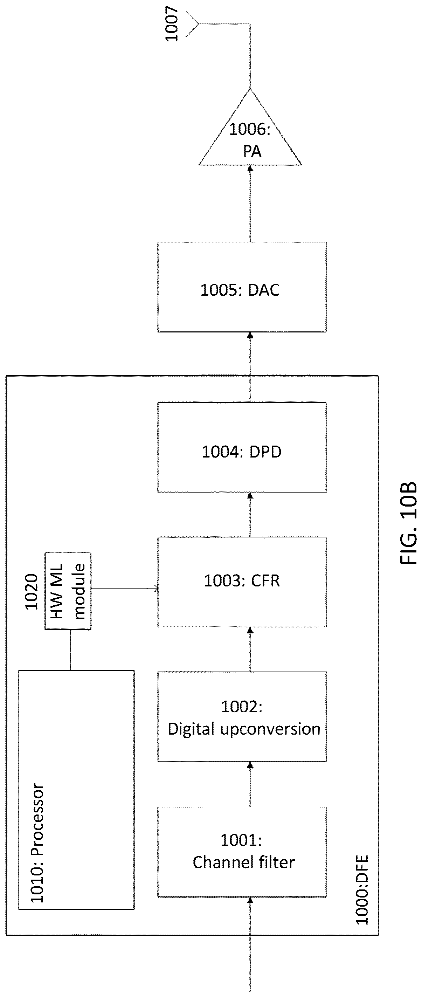

FIG. 10B illustrates an example of a DFE device 1000, wherein the trained machine learning model 420 is deployed as a hardware module 1020 and processed by a dedicated hardware circuit, such as an application-specific integrated circuit (ASIC), a system on chip (SoC), or one or more intellectual property (IP) cores, inside or beside the CFR processing module 1003. IP cores (also called semiconductor intellectual property cores) are reusable blocks of logic or data that can be used in the creation of a semiconductor chip. The configuration parameter values predicted by the trained machine learning model are loaded to the CFR processing module 1003 (i.e., the hardware module 1020 assists the CFR processing module 1003). The DFE device 1000 may be comprised in a wireless communication device, such as a UE 100 or a base station 104.

The channel filter 1001 filters out unwanted frequencies from the input signal, ensuring that only the desired frequency components are processed further.

The digital upconversion stage 1002 converts a baseband digital signal to an intermediate frequency (IF) or radio frequency (RF) signal, preparing it for transmission.

The crest factor reduction (CFR) processing module 1003 reduces the peaks in the signal to improve power efficiency and reduce distortion, making the signal more suitable for transmission.

The digital pre-distortion (DPD) stage 1004 compensates for non-linearities and imperfections in the transmission path, such as those introduced by the power amplifier 1006.

The digital-to-analog (DAC) converter 1005 is a component that converts the processed digital signal into an analog signal, which is necessary for transmission over analog mediums.

The power amplifier (PA) 1006 amplifies the analog signal to an appropriate level for transmission through an antenna 1007, ensuring that the signal can travel long distances.

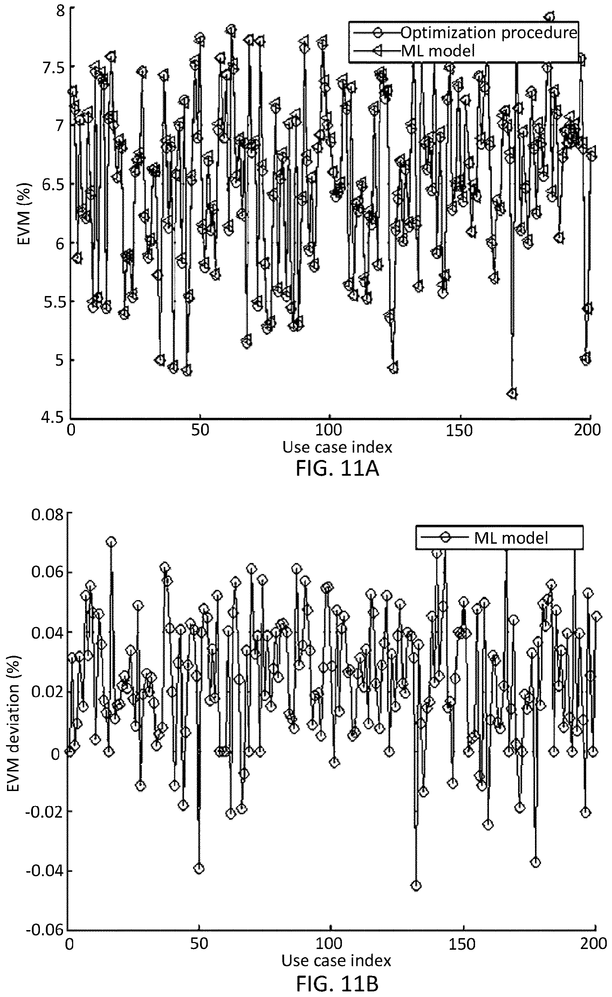

FIG. 11A illustrates an example of EVM achieved with a legacy optimization procedure and with the trained machine learning model 420.

In this example, the machine learning model 420 is trained for optimizing qualification window size of use cases which are multi-carrier, mixed-carrier types (5MHz ≤BW≤100MHz, e.g. LTE5, NR5, NR10, ..., NR100) and random allocations in 200MHz instance bandwidth. In this example, the CFR system comprises three peak cancellation stages and one circular clipper stage (as shown in FIG. 3). The performance (accuracy) is evaluated by 200 random use cases and target to PAPR 6.5dB. The performance criteria defined for this example are EVM deviation less than 0.1% and the margin to SEM greater than 3dB.

FIG. 11B illustrates an example of the EVM deviation between the legacy optimization procedure and the trained machine learning model 420. FIG. 11B shows that in all evaluated 200 use cases, the maximum EVM deviation (i.e., degradation) of the trained machine learning model 420 against the legacy optimization procedure is 0.07% (i.e., the EVM deviation performance criterion is fulfilled).

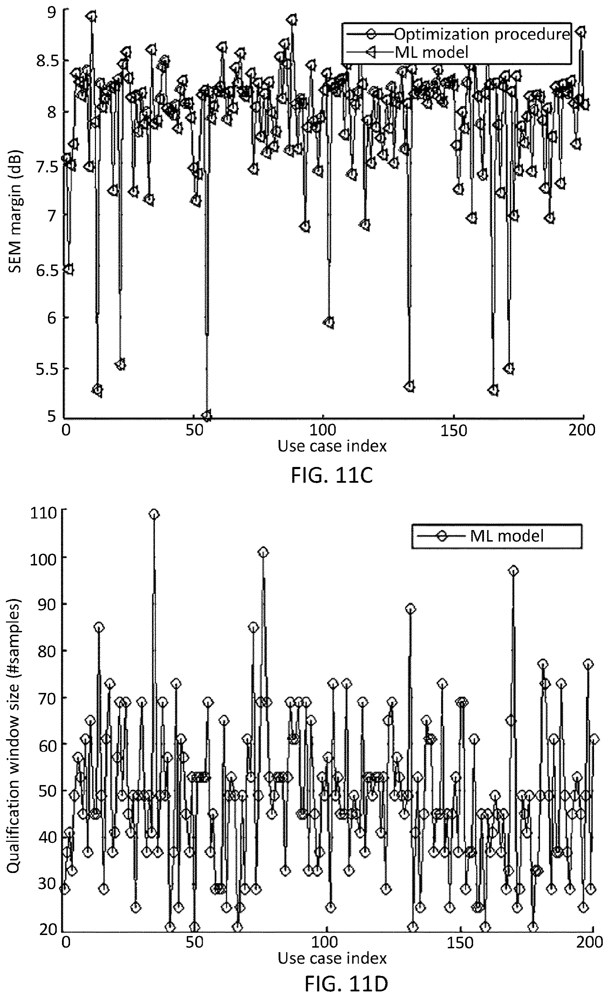

FIG. 11C illustrates an example of the margin to SEM achieved with the legacy optimization procedure and with the trained machine learning model 420. FIG. 11C shows that all 200 use cases have margin to SEM greater than 5dB with the trained machine learning model 420 (i.e., the margin to SEM criterion is fulfilled).

Thus, in this example, the trained machine learning model 420 fulfils both performance criteria (i.e., the EVM deviation less than 0.1% and the margin to SEM greater than 3dB). It should be noted that these performance criteria are used just as an example herein, and different performance criteria may alternatively be used.

FIG. 11D illustrates an example of the qualification window size predicted with the trained machine learning model 420.

FIG. 12 illustrates an example of an apparatus 107 (e.g., machine learning trainer apparatus) comprising means for performing one or more of the example embodiments described above (e.g., the method of FIG. 6, 7 or 8). For example, the apparatus 1200 may be, or comprise, or be comprised, a computer or any other computing device configured to train machine learning models.

The apparatus 1200 may comprise, for example, a circuitry or a chipset applicable for realizing one or more of the example embodiments described above. The apparatus 1200 may be an electronic device or computing system comprising one or more electronic circuitries. The apparatus 1200 may comprise a training circuitry 1210 such as at least one processor, and at least one memory 1220 storing instructions 1222 which, when executed by the at least one processor, cause the apparatus 1200 to carry out one or more of the example embodiments described above. Such instructions 1222 may, for example, include computer program code (software). The at least one processor and the at least one memory storing the instructions may provide the means for providing or causing the performance of any of the methods and/or blocks described above.

The processor is coupled to the memory 1220. The processor is configured to read and write data to and from the memory 1220. The memory 1220 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1220 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1220 or, alternatively or additionally, they may be received, by the apparatus, via an electromagnetic carrier signal and/or may be copied from a physical entity such as a computer program product. Execution of the computer readable instructions causes the apparatus 1200 to perform one or more of the functionalities described above.

The memory 1220 may be implemented using any suitable data storage technology, such as semiconductor-based memory devices, flash memory, magnetic memory devices and systems, optical memory devices and systems, fixed memory and/or removable memory.

The apparatus 1200 may further comprise or be connected to a communication interface 1230 comprising hardware and/or software for realizing communication connectivity according to one or more communication protocols. The communication interface 1230 may comprise at least one transmitter (Tx) and at least one receiver (Rx) that may be integrated to the apparatus 1200 or that the apparatus 1200 may be connected to. The communication interface 1230 may provide means for performing some of the blocks and/or functions (e.g., transmitting and receiving) for one or more example embodiments described above. The communication interface 1230 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1230 provides the apparatus with communication capabilities to communicate in the wireless communication network. The communication interface 1230 may, for example, provide a radio, cable or fiber interface to one or more network nodes of a radio access network and/or to one or more UEs 100, 102.

It is to be noted that the apparatus 1200 may further comprise various components not illustrated in FIG. 12. The various components may be hardware components and/or software components.

FIG. 13 illustrates an example of an apparatus 1300 comprising means for performing one or more of the example embodiments described above (e.g., the method of FIG. 9). For example, the apparatus 1300 may be a wireless communication device such as, or comprising, or comprised in, a user equipment 100, 102 or a network node (base station) 104 of a radio access network.

The apparatus 1300 may comprise, for example, a circuitry or a chipset applicable for realizing one or more of the example embodiments described above. The apparatus 1300 may be an electronic device comprising one or more electronic circuitries. The apparatus 1300 may comprise a communication control circuitry 1310 such as at least one processor, and at least one memory 1320 storing instructions 1322 which, when executed by the at least one processor, cause the apparatus 1300 to carry out one or more of the example embodiments described above. Such instructions 1322 may, for example, include computer program code (software). The at least one processor and the at least one memory storing the instructions may provide the means for providing or causing the performance of any of the methods and/or blocks described above.

The processor is coupled to the memory 1320. The processor is configured to read and write data to and from the memory 1320. The memory 1320 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 1320 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 1320 or, alternatively or additionally, they may be received, by the apparatus, via an electromagnetic carrier signal and/or may be copied from a physical entity such as a computer program product. Execution of the computer readable instructions causes the apparatus 1300 to perform one or more of the functionalities described above.

The memory 1320 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data, such as a current neighbour cell list, and, in some example embodiments, structures of frames used in the detected neighbour cells.

The apparatus 1300 may further comprise or be connected to a communication interface 1330, such as a radio unit, comprising hardware and/or software for realizing communication connectivity with one or more wireless communication devices according to one or more communication protocols. The communication interface 1330 comprises at least one transmitter (Tx) and at least one receiver (Rx) that may be integrated to the apparatus 1300 or that the apparatus 1300 may be connected to. The communication interface 1330 may provide means for performing some of the blocks and/or functions (e.g., transmitting and receiving) for one or more example embodiments described above. The communication interface 1330 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 1330 provides the apparatus with radio communication capabilities to communicate in the wireless communication network. The communication interface may, for example, provide a radio interface to one or more UEs 100, 102. The apparatus 1300 may further comprise or be connected to another interface towards a core network 110, such as the network coordinator apparatus or AMF, and/or to access nodes of the wireless communication network.

It is to be noted that the apparatus 1300 may further comprise various components not illustrated in FIG. 13. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

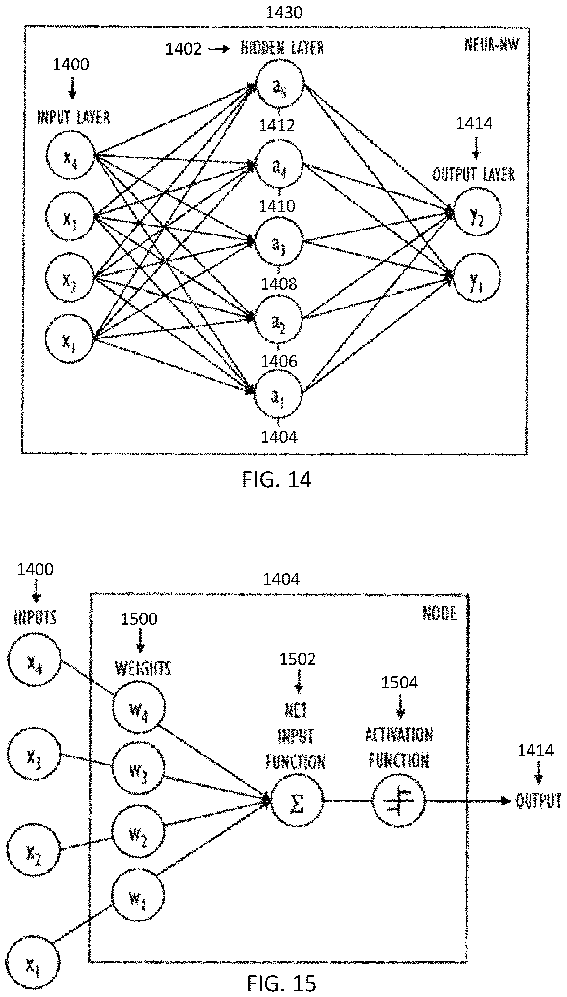

FIG. 14 illustrates an example of an artificial neural network 1430 with one hidden layer 1402, and FIG. 15 illustrates an example of a computational node 1404. However, it should be noted that the artificial neural network 1430 may also comprise more than one hidden layer 1402. The artificial neural network 1430 is one example of a machine learning algorithm that may be used to train the machine learning model 420.

An artificial neural network (ANN) 1430 comprises a set of rules that are designed to execute tasks such as regression, classification, clustering, and pattern recognition. The ANN may achieve such objectives with a learning/training procedure, where they are shown various examples of input data, along with the desired output. This way, the ANN learns to identify the proper output for any input within the training data manifold. Learning/training by using labels is called supervised learning and learning without labels is called unsupervised learning.

Deep learning (also known as deep structured learning or hierarchical learning) is part of a broader family of machine learning methods based on the layers used in the artificial neural network. A deep neural network (DNN) 1430 is an artificial neural network comprising multiple hidden layers 1402 between the input layer 1400 and the output layer 1414. Training of DNN allows it to find the correct mathematical manipulation to transform the input into the proper output, even when the relationship is highly non-linear and/or complicated. Deep learning may require a large amount of input data.

A given hidden layer 1402 comprises nodes 1404, 1406, 1408, 1410, 1412, where the computation takes place. As shown in FIG. 15, a given node 1404 combines input data 1400 with a set of coefficients, or weights 1500, that either amplify or dampen that input 1400, thereby assigning significance to inputs 1400 with regard to the task that the algorithm is trying to learn. The input-weight products are added 1502 and the sum is passed through an activation function 1504, to determine whether and to what extent that signal should progress further through the neural network 1430 to affect the ultimate outcome, such as an act of classification. In the process, the neural network learns to recognize correlations between certain relevant features and optimal results.

In the case of classification, the output of a DNN 1430 may be considered as a likelihood of a particular outcome. In this case, the number of layers 1402 may vary proportional to the number of the used input data 1400. However, when the number of input data 1400 is high, the accuracy of the outcome 1414 is more reliable. On the other hand, when there are fewer layers 1402, the computation might take less time and thereby reduce the latency. However, this highly depends on the specific DNN architecture and/or the computational resources available.

Initial weights 1500 of the model can be set in various alternative ways. During the training phase, they may be adapted to improve the accuracy of the process based on analyzing errors in decision-making. Training a model is basically a trial-and-error activity. In principle, a given node 1404, 1406, 1408, 1410, 1412 of the neural network 1430 makes a decision (input*weight) and then compares this decision to collected data to find out the difference to the collected data. In other words, it determines the error, based on which the weights 1500 are adjusted. Thus, the training of the model may be considered a corrective feedback loop.

For example, a neural network model may be trained using a stochastic gradient descent optimization algorithm, for which the gradients are calculated using the backpropagation algorithm. The gradient descent algorithm seeks to change the weights 1500, so that the next evaluation reduces the error, meaning that the optimization algorithm is navigating down the gradient (or slope) of error. It is also possible to use any other suitable optimization algorithm, if it provides sufficiently accurate weights 1500. Consequently, the trained parameters of the neural network 1430 may comprise the weights 1500.

In the context of an optimization algorithm, the function used to evaluate a candidate solution (i.e., a set of weights) is referred to as the objective function. With neural networks, where the target is to minimize the error, the objective function may be referred to as a cost function or a loss function. In adjusting weights 1500, any suitable method may be used as a loss function. Some examples of a loss function are mean squared error (MSE), maximum likelihood estimation (MLE), and cross entropy.

As for the activation function 1504 of the node 1404, it defines the output 1414 of that node 1404 given an input or set of inputs 1400. The node 1404 calculates a weighted sum of inputs, perhaps adds a bias, and then makes a decision as "activate" or "not activate" based on a decision threshold as a binary activation or using an activation function 1504 that gives a nonlinear decision function. Any suitable activation function 1504 may be used, for example sigmoid, rectified linear unit (ReLU), normalized exponential function (softmax), sotfplus, tanh, etc. In deep learning, the activation function 1504 may be set at the layer level and applies to all neurons (nodes) in that layer. The output 1414 is then used as input for the next node and so on until a desired solution to the original problem is found.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus (107) comprising at least one processor (1210), and at least one memory (1220) storing instructions (1222) that, when executed by the at least one processor (1210), cause the apparatus (107) at least to:
select one or more crest factor reduction processing characteristics to be optimized for a crest factor reduction technique used to lower a peak-to-average power ratio of transmitted radio signals,
wherein the one or more crest factor reduction processing characteristics comprise at least one of: a pulse length, a number of peak trackers, a number of crest factor reduction stages, one or more hard clipping factors, a peak qualification window size, or a clipping threshold;
collect use case attribute data comprising a set of values of one or more use case attributes associated with the crest factor reduction technique,
wherein the one or more use case attributes comprise at least one of: a number of frequency bands, a frequency band bandwidth, a frequency band power, a frequency location, or a maximum frequency range;
determine, based on the use case attribute data, a set of optimized configuration parameter values for the one or more crest factor reduction processing characteristics;
generate a set of labelled training data based on the use case attribute data and the set of optimized configuration parameter values,
wherein the set of labelled training data comprises labels corresponding to the use case attribute data, the labels representing the optimized configuration parameter values for the one or more crest factor reduction processing characteristics; and
train, based on the set of labelled training data, a machine learning model (420) for predicting configuration parameter values for the one or more crest factor reduction processing characteristics.

2. The apparatus (107) of claim 1, further being caused to:
train, based on the set of labelled training data, a plurality of machine learning models (420, 521, 522) for predicting the configuration parameter values for the one or more crest factor reduction processing characteristics,
wherein each machine learning model of the plurality of machine learning models (420, 521, 522) is trained with a different supervised machine learning algorithm;
compare a performance of the plurality of machine learning models (420, 521, 522) after training the plurality of machine learning models; and
select, based on the comparison, the machine learning model (420) from the plurality of machine learning models (420, 521, 522).

3. The apparatus (107) of any preceding claim, further being caused to:
evaluate a performance of the machine learning model (420),
wherein the evaluation of the performance is based on a different set of values of the one or more use case attributes than the set of values used for generating the set of labelled training data;
determine whether the performance of the machine learning model (420) fulfils one or more performance criteria; and
based on determining that the performance of the machine learning model (420) fulfils the one or more performance criteria, deploy the machine learning model (420) to a wireless communication device (100, 104).

4. The apparatus (107) of any of claims 1 to 2, further being caused to:
evaluate a performance of the machine learning model (420),
wherein the evaluation of the performance is based on a different set of values of the one or more use case attributes than the set of values used for generating the set of labelled training data;
determine whether the performance of the machine learning model (420) fulfils one or more performance criteria;
based on determining that the performance of the machine learning model (420) does not fulfil the one or more performance criteria,
regenerate the set of labelled training data based on a different set of features from the use case attribute data compared to a set of features used for generating the set of labelled training data previously used for training the machine learning model (420); and
repeat the training of the machine learning model (420) based on the set of labelled training data after the regeneration.

5. The apparatus (107) of any of claims 1 to 2, further being caused to:
evaluate a performance of the machine learning model (420),
wherein the evaluation of the performance is based on a different set of values of the one or more use case attributes than the set of values used for generating the set of labelled training data;
determine whether the performance of the machine learning model (420) fulfils one or more performance criteria;
based on determining that the performance of the machine learning model (420) does not fulfil the one or more performance criteria,
collect additional use case attribute data;
generate an additional set of labelled training data based on the additional use case attribute data; and
repeat the training of the machine learning model (420) based on the additional set of labelled training data.

6. The apparatus (107) of any of claims 3 to 5, wherein the one or more performance criteria comprise at least:
a deviation to a reference error vector magnitude being less than a first pre-defined threshold, and
a margin to a spectral emission mask limit being greater than a second pre-defined threshold.

7. An apparatus (100, 104, 1300) comprising at least one processor (1310), and at least one memory (1320) storing instructions (1322) that, when executed by the at least one processor (1310), cause the apparatus (100, 104, 1300) at least to:
provide, to a machine learning model (420), input data comprising one or more values of one or more use case attributes associated with a crest factor reduction technique used to lower a peak-to-average power ratio of transmitted radio signals,
wherein the one or more use case attributes comprise at least one of: a number of frequency bands, a frequency band bandwidth, a frequency band power, a frequency location, or a maximum frequency range,
wherein the machine learning model (420) is trained for predicting configuration parameter values for one or more crest factor reduction processing characteristics of the crest factor reduction technique,
wherein the one or more crest factor reduction processing characteristics comprise at least one of: a pulse length, a number of peak trackers, a number of crest factor reduction stages, one or more hard clipping factors, a peak qualification window size, or a clipping threshold;
receive, from the machine learning model (420), output data comprising one or more configuration parameter values for the one or more crest factor reduction processing characteristics; and
apply the crest factor reduction technique to one or more transmitted signals based on the output data.

8. The apparatus (100, 104, 1300) of claim 7, wherein the machine learning model (420) was trained by the apparatus (107) of any of claims 1 to 6.

9. A method comprising:
selecting (601, 701, 801) one or more crest factor reduction processing characteristics to be optimized for a crest factor reduction technique used to lower a peak-to-average power ratio of transmitted radio signals,
wherein the one or more crest factor reduction processing characteristics comprise at least one of: a pulse length, a number of peak trackers, a number of crest factor reduction stages, one or more hard clipping factors, a peak qualification window size, or a clipping threshold;
collecting (602, 702, 802) use case attribute data comprising a set of values of one or more use case attributes associated with the crest factor reduction technique,
wherein the one or more use case attributes comprise at least one of: a number of frequency bands, a frequency band bandwidth, a frequency band power, a frequency location, or a maximum frequency range;
determining (603, 703, 803), based on the use case attribute data, a set of optimized configuration parameter values for the one or more crest factor reduction processing characteristics;
generating (605, 705, 804) a set of labelled training data based on the use case attribute data and the set of optimized configuration parameter values,
wherein the set of labelled training data comprises labels corresponding to the use case attribute data, the labels representing the optimized configuration parameter values for the one or more crest factor reduction processing characteristics; and
training (606, 706, 805), based on the set of labelled training data, a machine learning model (420) for predicting configuration parameter values for the one or more crest factor reduction processing characteristics.

10. A method comprising:
providing (901), to a machine learning model (420), input data comprising one or more values of one or more use case attributes associated with a crest factor reduction technique used to lower a peak-to-average power ratio of transmitted radio signals,
wherein the one or more use case attributes comprise at least one of: a number of frequency bands, a frequency band bandwidth, a frequency band power, a frequency location, or a maximum frequency range,
wherein the machine learning model (420) is trained for predicting configuration parameter values for one or more crest factor reduction processing characteristics of the crest factor reduction technique,
wherein the one or more crest factor reduction processing characteristics comprise at least one of: a pulse length, a number of peak trackers, a number of crest factor reduction stages, one or more hard clipping factors, a peak qualification window size, or a clipping threshold;
receiving (902), from the machine learning model (420), output data comprising one or more configuration parameter values for the one or more crest factor reduction processing characteristics; and
applying (903) the crest factor reduction technique to one or more transmitted signals based on the output data.

11. A non-transitory computer readable medium comprising program instructions, when executed by an apparatus (107), cause the apparatus (107) to perform at least the following:
selecting one or more crest factor reduction processing characteristics to be optimized for a crest factor reduction technique used to lower a peak-to-average power ratio of transmitted radio signals,
wherein the one or more crest factor reduction processing characteristics comprise at least one of: a pulse length, a number of peak trackers, a number of crest factor reduction stages, one or more hard clipping factors, a peak qualification window size, or a clipping threshold;
collecting use case attribute data comprising a set of values of one or more use case attributes associated with the crest factor reduction technique,
wherein the one or more use case attributes comprise at least one of: a number of frequency bands, a frequency band bandwidth, a frequency band power, a frequency location, or a maximum frequency range;
determining, based on the use case attribute data, a set of optimized configuration parameter values for the one or more crest factor reduction processing characteristics;
generating a set of labelled training data based on the use case attribute data and the set of optimized configuration parameter values,
wherein the set of labelled training data comprises labels corresponding to the use case attribute data, the labels representing the optimized configuration parameter values for the one or more crest factor reduction processing characteristics; and
training, based on the set of labelled training data, a machine learning model (420) for predicting configuration parameter values for the one or more crest factor reduction processing characteristics.

12. A non-transitory computer readable medium comprising program instructions, when executed by an apparatus (100, 104, 1300), cause the apparatus (100, 104, 1300) to perform at least the following:
providing, to a machine learning model (420), input data comprising one or more values of one or more use case attributes associated with a crest factor reduction technique used to lower a peak-to-average power ratio of transmitted radio signals,
wherein the one or more use case attributes comprise at least one of: a number of frequency bands, a frequency band bandwidth, a frequency band power, a frequency location, or a maximum frequency range,
wherein the machine learning model (420) is trained for predicting configuration parameter values for one or more crest factor reduction processing characteristics of the crest factor reduction technique,
wherein the one or more crest factor reduction processing characteristics comprise at least one of: a pulse length, a number of peak trackers, a number of crest factor reduction stages, one or more hard clipping factors, a peak qualification window size, or a clipping threshold;
receiving, from the machine learning model (420), output data comprising one or more configuration parameter values for the one or more crest factor reduction processing characteristics; and
applying the crest factor reduction technique to one or more transmitted signals based on the output data.

13. A system comprising at least a machine learning trainer apparatus (107) and a wireless communication device (100, 104),
wherein the machine learning trainer apparatus (107) is configured to:
select one or more crest factor reduction processing characteristics to be optimized for a crest factor reduction technique used to lower a peak-to-average power ratio of transmitted radio signals,
wherein the one or more crest factor reduction processing characteristics comprise at least one of: a pulse length, a number of peak trackers, a number of crest factor reduction stages, one or more hard clipping factors, a peak qualification window size, or a clipping threshold;
collect use case attribute data comprising a set of values of one or more use case attributes associated with the crest factor reduction technique,
wherein the one or more use case attributes comprise at least one of: a number of frequency bands, a frequency band bandwidth, a frequency band power, a frequency location, or a maximum frequency range;
determine, based on the use case attribute data, a set of optimized configuration parameter values for the one or more crest factor reduction processing characteristics;
generate a set of labelled training data based on the use case attribute data and the set of optimized configuration parameter values,
wherein the set of labelled training data comprises labels corresponding to the use case attribute data, the labels representing the optimized configuration parameter values for the one or more crest factor reduction processing characteristics; and
train, based on the set of labelled training data, a machine learning model (420) for predicting configuration parameter values for the one or more crest factor reduction processing characteristics;
wherein the wireless communication device (100, 104) is configured to:
provide, to the machine learning model (420), input data comprising one or more values of the one or more use case attributes associated with the crest factor reduction technique,
wherein the machine learning model (420) is trained for predicting the configuration parameter values for the one or more crest factor reduction processing characteristics of the crest factor reduction technique;
receive, from the machine learning model (420), output data comprising one or more configuration parameter values for the one or more crest factor reduction processing characteristics; and
apply the crest factor reduction technique to one or more transmitted signals based on the output data.
